# EUROPEAN PATENT APPLICATION

(11) **EP 2 343 792 A1**
(43) Date of publication of application: **13.07.2011**
(21) Application number: 10150228.4
(22) Date of filing: 07.01.2010
(51) Int. Cl.: H02K 5/04, H02K 35/02, H01M 2/02

(54) **Micro power generating device**

(71) Applicant: Dosun Solar Technology Co., Ltd., Zhong-He City, Taipei County 235 (TW)
(72) Inventor: Chen, Chia-Li, 235 Taipei County (TW)
(74) Representative: Becker Kurig Straus

(57) **Abstract**

A micro power generating device configured to be disposed on a medium structure always in a vibrating environment to provide low-power electric energy includes a case, a body, elastic members, at least a magnetic member, a coil, and a circuit board. The body is combined in the case and has a chamber. One elastic member is respectively disposed on a top side and a bottom side of the chamber. The magnetic member is slidably accommodated in the chamber and is moved back and forth in the chamber by elastic forces provided by the elastic members. The coil is wound around the body. When the magnetic member is moved back and forth in the chamber under the effects of vibrations and the elastic forces provided by the elastic members, the coil generates an induced current accordingly. The circuit board is electrically connected to the coil, and used for processing the induced current generated by the coil into a power supply for external use.

## Description

### BACKGROUND OF THE INVENTION

### Field of Invention

The present invention relates to a power generating device, and more particularly to a micro power generating device capable of generating an electric power by slight vibrations to provide low-power electric energy and configured to be disposed on a medium structure always in a vibrating environment for use, which follows the trend of energy saving and environmental protection, and is characterized by simple structure and low cost.

### Related Art

For an electronic product only requiring low-power electric energy for operation, the electric energy is usually supplied by various batteries. However, since the batteries can only provide limited electric energy, continuous replacement of batteries is required in order to supplement the electric energy, and the disposed batteries inevitably contaminate the environment; even if the disposed batteries may be recycled to minimize the environmental impact, extra energy is consumed, which goes against the current trend of energy saving and environmental protection.

Alternatively, secondary batteries may be used to replace the aforementioned primary batteries so as to reduce the environmental impact. However, since the electric energy stored in the secondary battery is also limited, a user has to recharge the secondary battery using an external power supply after the stored electric energy is exhausted.

Since the electric energy consumption of the secondary batteries varies in speed due to different properties of individual electronic products and personal use habits, and it is difficult to detect the remaining electric energy of the battery at any time, the user often cannot know the remaining electric energy of the secondary battery in real time. I n an emergency when the user needs to operate an electronic product carried with him/her, but forgot to bring a spare battery or charger or is at a place without power supply, great trouble and inconvenience will be caused to the user if the electric energy stored in the secondary battery installed in the electronic product is exhausted.

Taking a bicycle lamp as an example, illumination is indispensable for riding at night in order to ensure the safety of a rider. However, as described above, the rider also cannot determine the remaining electric energy of a battery in the bicycle lamp in advance. As a result, the safety of the rider will be threatened if the electric power is insufficient when riding outdoors at night.

In view of the above, in order to follow the current trend of energy saving and environmental protection and enable a user to operate an electronic product that can be driven by low-power electric energy in an environment without power supply, the present invention is made by the inventor through years of experience and continuous research, development and improvement.

### SUMMARY OF THE INVENTION

Accordingly, the present invention is mainly directed to a micro power generating device, configured to be disposed on a medium structure always in a vibrating environment to provide low-power electric energy in an environment without power supply, which follows the trend of energy saving and environmental protection, and is characterized by simple structure and low cost.

In order to achieve the above objectives, the present invention provides a micro power generating device configured to be disposed on a medium structure always in a vibrating environment, which includes a case, a body, at least a magnetic member, two elastic members, a coil, and a circuit board. The body is combined in the case and has a chamber. The magnetic member is slideably accommodated in the chamber. The elastic members are respectively disposed on a top side and a bottom side of the chamber to provide elastic forces for moving the magnetic member back and forth. The coil is wound around the body. When the magnetic member is moved back and forth in the chamber under the effects of vibrations and the elastic forces provided by the elastic members, the coil generates an induced current accordingly. The circuit board is electrically connected to the coil, and used for processing the induced current generated by the coil into a power supply for external use.

In the implementation, an inner wall of the chamber is preferably a smooth inner wall.

In the implementation, the body is preferably a sealed cylinder, and the chamber in the body is preferably in a vacuum state.

In the implementation, the elastic member is preferably a spring.

In the implementation, the micro power generating device is preferably combined with a lamp holder to form a bicycle lamp.

In order to make the features and functions of the present invention more comprehensible, embodiments accompanied with figures are described in detail below.

### BRIEF DESCRIPTION OF THE DRAWINGS

The present invention will become more fully understood from the detailed description given herein below for illustration only, and thus are not limitative of the present invention, and wherein:
FIG 1 is a three-dimensional outside view of a micro power generating device of the present invention;
FIG. 2 is a three-dimensional exploded view of the micro power generating device of the present invention;
FIG. 3 is a cross-sectional view of FIG. 2 taken along Line a-a';
FIG 4 is a schematic view illustrating operation of the micro power generating device of the present invention; and
FIG. 5 is a view illustrating a use state of the micro power generating device of the present invention.

### DETAILED DESCRIPTION OF THE INVENTION

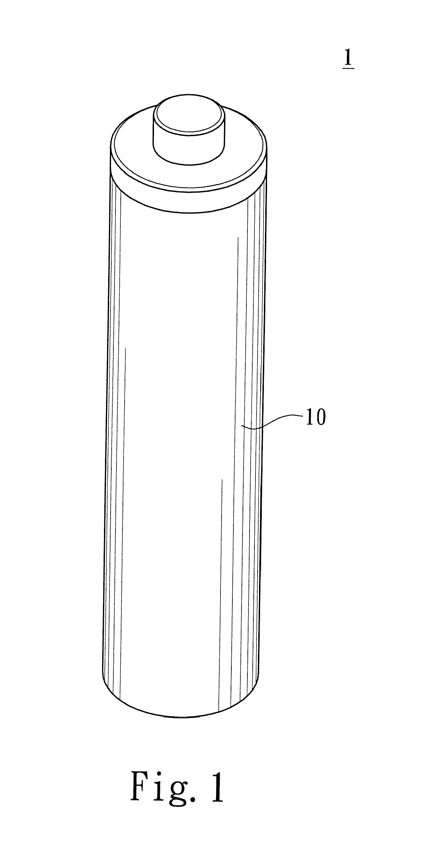

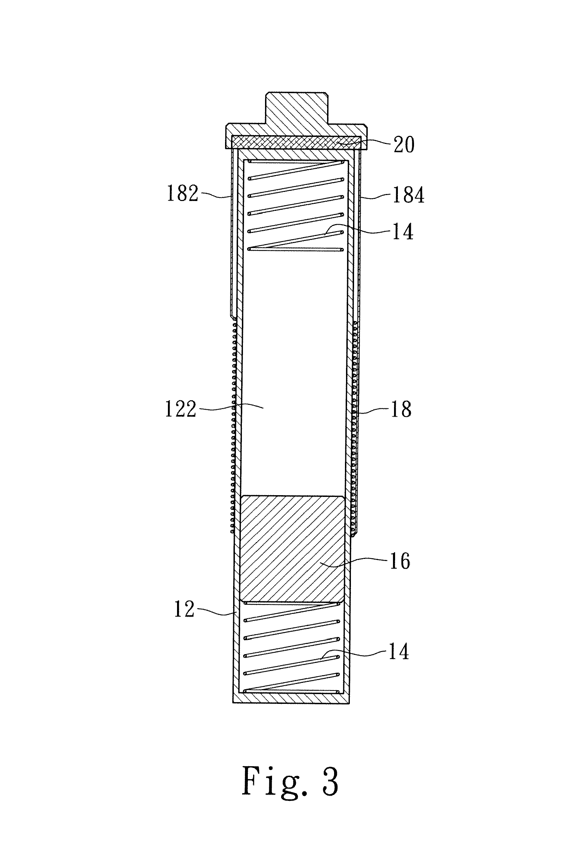

FIGs. 1 to 3 show a preferred embodiment of a micro power generating device 1 of the present invention. In this embodiment, the micro power generating device 1 includes a case 10, a body 12, two elastic members 14, a magnetic member 16, a coil 18, and a circuit board 20.

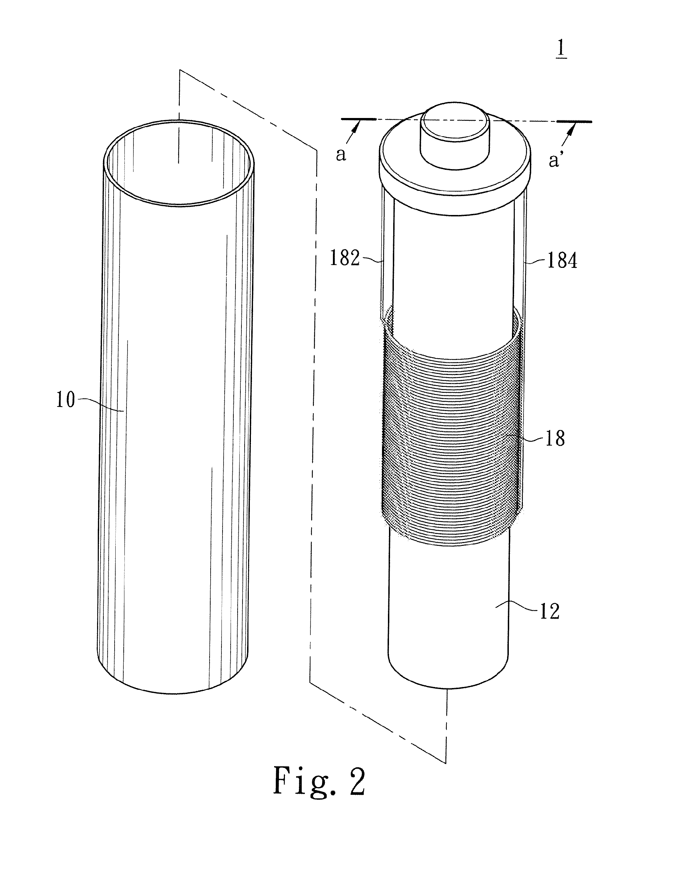

As shown in FIG. 2, the body 12 is combined in the case 10, and has a chamber 122 defined therein for accommodating the elastic members 14 and the magnetic member 16. Moreover, the two elastic members 14 are respectively disposed on a top side and a bottom side of the chamber 122, and the magnetic member 16 is slidably accommodated in the chamber 122.

The coil 18 is wound around the body 12, and has two free ends, namely, a first end 182 and a second end 184. The first end 182 and the second end 184 are respectively electrically connected to the circuit board 20. In this embodiment, the circuit board 20 is disposed in a T-shaped cover, and the T-shaped cover is fixed to one side of the body 12.

In this embodiment, the magnetic member 16 just presses against an inner wall of the chamber 122. In order to reduce the friction that may be encountered by the magnetic member 16 during sliding, the inner wall of the chamber 122 may be designed as a smooth inner wall. Moreover, the elastic member may be any elastic element, and a spring is taken as an example in this embodiment.

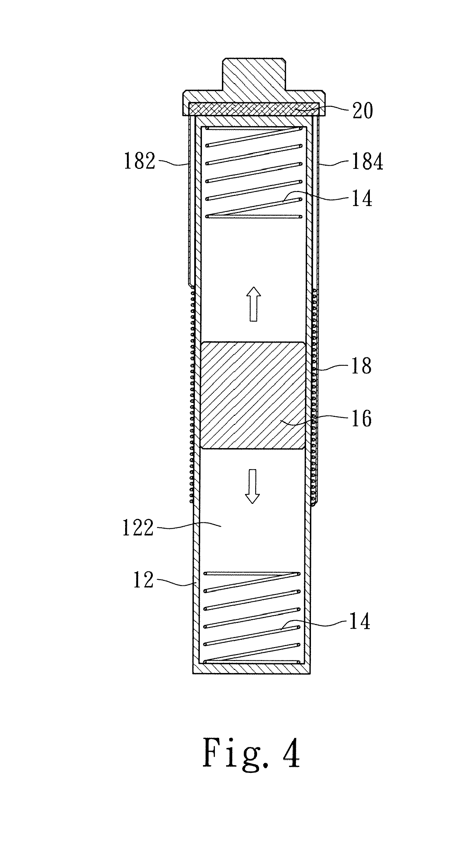

The operating principle of the micro power generating device is shown in FIG. 4. As shown in the figure, when the micro power generating device 1 is subjected to slight vibrations, the magnetic member 16 located in the chamber 122 may begin to move. Upon hitting the elastic member 14 at one end, the magnetic member 16 may be moved in an opposite direction towards the elastic member 14 at the other end by an elastic force provided by the elastic member 14 at the end. In this way, once activated by slight vibrations, the magnetic member 16 may be moved back and forth in the chamber 122 for a long time by the opposite elastic forces provided by the elastic members.

When moved back and forth in the chamber 122, the magnetic member 16 continuously passes to and fro through the coil 18 wound around the body 12. When the magnetic member 16 continuously passes through the coil 18 to produce relative displacements, the coil 18 generates a corresponding induced current by the induction of the magnetic member 16. Since the coil 18 is electrically connected to the circuit board 20, the generated induced current is transported to the circuit board 20, and then processed into a power supply for external use.

Moreover, after the micro power generating device 1 is subjected to slight vibrations, in order to enable the magnetic member 16 to move in the chamber 122 for a longer time to continuously pass through the coil 18 such that the coil 18 continuously generates the induced current, the chamber 122 in the body 12 is preferably in a vacuum state. The resistance of air molecules to the magnetic member 16 can be effectively removed by designing the body 12 as a sealed cylinder and vacuum pumping the chamber 122 in the body 12, thereby enabling the magnetic member 16 to move for a longer time.

In use, the micro power generating device of the present invention is disposed on a medium structure always in a vibrating environment to provide lower-power electric energy. The medium structure transfers vibrations generated by the vibrating environment to the magnetic member in the case, so as to activate the magnetic member to move. The medium structure may be any vehicle, machinery equipment, or human body.

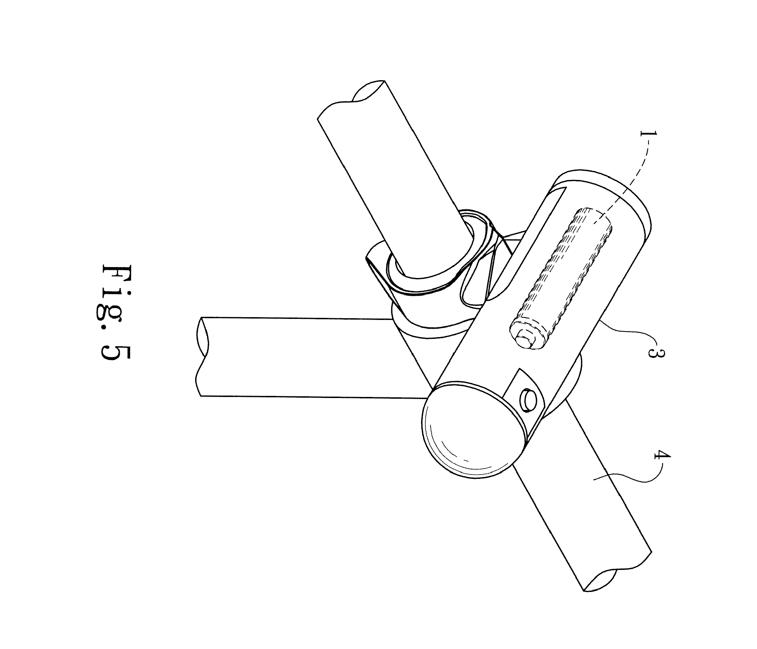

FIG. 5 shows an example of the use of the micro power generating device of the present invention. As shown in the figure, a bicycle lamp may be formed by combining the micro power generating device 1 with a lamp holder 3 disposed on a bicycle handle bar 4, so as to provide bicycle illumination.

Since the bicycle lamp usually only requires low-power electric energy for driving, the micro power generating device of the present invention is sufficient to provide the required electric energy without any extra power supply (for example, a primary battery or secondary battery), so that the disadvantages in the prior art can be avoided. It is known that when a rider rides a bicycle on an uneven road surface, vibrations are continuously produced. The micro power generating device of the present invention can convert the vibrations produced during riding into an effective electric energy, so as to continuously provide the illumination required for traveling.

In addition to the use in the bicycle, the micro power generating device of the present invention is applicable to any situation in which slight vibrations may be produced to serve as a supplier of electric energy. In particular, the micro power generating device of the present invention not only can serve as a main power supply for an electronic device that can be driven by low-power electric energy, but also can serve as an auxiliary power supply for use in combination with a secondary battery to provide electric energy so as to recharge the secondary battery.

Moreover, when the medium structure is a human body, the micro power generating device of the present invention also has important applications. For example, the micro power generating device may be used in a medical instrument worn on the human body as a source of electric energy. Taking a cardiac pacemaker as an example, since the cardiac pacemaker is worn on a user's body, a secondary battery and the micro power generating device of the present invention may be used in combination so as to ensure that power can be continuously supplied to the cardiac pacemaker. When the user is in a moving state, slight vibrations produced by the user's body can enable the micro power generating device to continuously generate an induced current so as to recharge the secondary battery. When the user is in a stationary state, the electric energy stored in the secondary battery can be used.

Therefore, the present invention has the following advantages.
1. By respectively disposing one elastic member on the top end and the bottom end of the chamber of the body, elastic forces for moving the magnetic member back and forth can be provided when the magnetic member in the chamber begins to move under slight vibrations, such that the magnetic member can continuously pass to and fro through the coil to generate an induced current as a source of electric energy.
2. By designing the chamber of the body to be in the vacuum state, the possible resistance of air to the movement of the magnetic member can be effectively removed, thereby increasing the time for back-and-forth movement of the magnetic member.

In view of the above, the present invention surely can achieve the expected objectives to provide a micro power generating device configured to be disposed on a medium structure always in a vibrating environment, such that displacements of a magnet relative to a coil can be produced by slight vibrations and provided elastic forces, so as to generate an electric power and provide an electronic product with low-power electric energy. The micro power generating device follows the trend of energy saving and environmental protection, is characterized by simple structure and low cost, and has industrial applicability. Thus, the application for a patent is filed according to the law.

The above description and drawings are merely intended to illustrate the embodiments of the present invention. It will be apparent to persons skilled in the art that equivalent variations and modifications can be made without departing from the scope and spirit of the invention.

## Claims

1. A micro power generating device, configured to be disposed on a medium structure always in a vibrating environment to provide low-power electric energy, the micro power generating device comprising:
a case;
a body, combined in the case and having a chamber;
at least a magnetic member, slidably accommodated in the chamber;
two elastic members, respectively disposed on a top side and a bottom side of the chamber to provide elastic forces for moving the magnetic member back and forth;
a coil, wound around the body;
wherein when the medium structure transfers vibrations generated by the vibrating environment to the magnetic member in the case, such that the magnetic member is moved back and forth in the chamber under the effects of the vibrations and the elastic forces provided by the elastic members, the coil generates an induced current accordingly; and
a circuit board, electrically connected to the coil, for processing the induced current generated by the coil into a power supply for external use.

2. The micro power generating device according to claim 1, wherein an inner wall of the chamber is preferably a smooth inner wall.

3. The micro power generating device according to claim 1, wherein the body is a sealed cylinder, and the chamber in the body is in a vacuum state.

4. The micro power generating device according to claim 1, wherein the elastic member is a spring.

5. The micro power generating device according to claim 1, capable of being combined with a lamp holder to form a bicycle lamp configured to be disposed on a bicycle or other medium structures.
